# EUROPEAN PATENT SPECIFICATION

(11) **EP 3 468 371 B1**
(45) Date of publication and mention of the grant of the patent: **23.06.2021**
(21) Application number: 17768570.8
(22) Date of filing: 01.09.2017
(51) Int. Cl.: A21D 13/066, A21D 13/42

(54) **GLUTEN-FREE TORTILLAS**
GLUTENFREIE TORTILLAS
TORTILLAS SANS GLUTEN

(43) Date of publication of application: 17.04.2019
(73) Proprietor: General Mills, Inc., Minneapolis, Minnesota 55426 (US)
(72) Inventor: CAMMAROTA, Carina Claudia, E 31001 Pamplona, Navarra (ES); NG, Christine, S.T., Minneapolis, MN 55414 (US); PLAZA GARCIA, Jonas, E 26340 San Asensio, La Rioja (ES)
(74) Representative: Vossius & Partner Patentanwälte Rechtsanwälte mbB
(86) International application number: PCT/US2017/049908
(87) International publication number: WO 2019/045754

(56) References cited:
- WO-A1-2015/169778
- US-A1- 2010 272 863
- Anonymous: "Gluten-Free Amaranth Tortillas + Vegetarian Breakfast Tacos - The Bojon Gourmet", , 5 February 2017 (2017-02-05), pages 1-33, XP055413860, Retrieved from the Internet: URL:http://web.archive.org/web/20170205100 235/http://bojongourmet.com/2016/10/gluten -free-amaranth-tortillas-vegetarian-breakf ast-tacos/ [retrieved on 2017-10-09]
- Anonymous: "No More Naked Burritos: Gluten Free Flour Tortillas Recipe ~ Recipe from The Gluten-Free Cooking School", , 15 February 2017 (2017-02-15), pages 1-5, XP055413811, Retrieved from the Internet: URL:http://web.archive.org/web/20170215120 615/http://www.glutenfreecookingschool.com /gluten-free-casein-free-flour-tortillas/# expand [retrieved on 2017-10-09]
- Anonymous: "All Purpose Gluten Free Flour Mix Recipe ~ Recipe from The Gluten-Free Cooking School", , 31 July 2016 (2016-07-31), pages 1-8, XP055413817, Retrieved from the Internet: URL:https://web.archive.org/web/2016073106 5516/http://www.glutenfreecookingschool.co m/gluten-free-flour-recipe/ [retrieved on 2017-10-09]
- Anonymous: "Fiesta Tortillas|Rudi's Bakery", , 1 August 2016 (2016-08-01), pages 1-1, XP055413770, Retrieved from the Internet: URL:https://web.archive.org/web/2016080104 1524/https://www.rudisbakery.com/gluten-fr ee/product/fiesta-tortillas/ [retrieved on 2017-10-09]
- DATABASE GNPD [Online] MINTEL; November 2013 (2013-11), Anonymous: "Gluten-free Chicken Quesadilla", XP002774523, Database accession no. 2211491
- DATABASE GNPD [Online] MINTEL; January 2014 (2014-01), Anonymous: "Gluten free shredded Beef", XP002774524, Database accession no. 2292277

## Description

### BACKGROUND OF THE INVENTION

Consumers are searching for healthy and yet convenient food options, with an increasing number of individuals also avoiding gluten due to gluten sensitivities or intolerance to gluten. Gluten is a protein found in a variety of grains including wheat, rye and barley, with wheat containing the highest levels of gluten when compared to other cereal grains.

Gluten is responsible for the texture and taste of wheat flour-based baked goods, such as tortillas, cookies, brownies and breads. Upon hydration, gluten forms a network of fine strands that give the dough structure and the capacity to stretch and/or rise during baking. The elasticity of gluten enables the dough to trap gases, which create open cellular structures upon baking.

Recently there has been a growing trend to provide gluten-free goods, such as tortillas. While consumers are demanding gluten-free products, it is very difficult to produce gluten-free products having a similar taste and texture as traditional gluten and/or wheat flour containing products because, as described above, gluten provides the structure or framework for traditional baked goods. When wheat flour is replaced with a gluten-free flour, such as rice flour, the dough lacks a matrix to create the structure and texture typically associated with comparable gluten containing baked goods. For example, gluten-free dough may not have the same elasticity as a gluten dough, and may be drier and more difficult to handle.

In particular, tortillas are desirably shelf stable, highly soft and flexible, and can fold and bend without breaking. The term "tortilla" is used herein to refer to a Mexican style tortilla, i.e., a generally flat unleavened cooked flexible pan baked dough product which is generally circular in shape. Tortillas are typically made from a corn masa dough ("tortilla de maiz") or from a wheat dough ("tortilla de harina"). The two versions of the Mexican tortilla have different textures owing to the grains from which they originate. The maize version is somewhat thicker and heartier in texture, while the wheat version is less easily broken, due to its elevated gluten content.

Consumers desiring a gluten-free tortilla are most often limited to corn tortillas, which are not as flexible or easy to handle. Soft shaped tortilla products, such as those described in U.S. 2010/0272863, also provide options for consumers for a tortilla that is easy to use and less messy. However, such soft shaped tortillas must be flexible and durable enough to withstand shaping, which is difficult to accomplish in gluten free products.

The Bojon Gourmet, February 2017, describes gluten-free amaranth tortillas and vegetarian breakfast tacos.

Thus, there is a need in the art for a gluten-free, soft shaped tortilla product that is easy to use, less messy, delicious to eat and healthier than other options. Also, there is a need in the art for methods for manufacturing and using such a product.

### SUMMARY OF THE INVENTION

The present invention is defined as in the appended claims.

The present invention relates to gluten-free tortillas and methods of making the tortillas. According to the present invention, the tortillas are formed from a composition including a gluten-free flour mixture constituting from 40-70% of weight of the composition, with the gluten-free flour mixture consisting of a combination of four different flours.

The composition includes at least 30%, preferably 30-50%, water by weight of the composition, and an enzyme, such as in an amount of about 0.2-1%, for structural integrity purposes.

The gluten-free tortilla may be a soft, flat tortilla or a soft shaped tortilla having a formed shape selected from a cup, bowl, U- or square bottomed shaped taco shell, boat, tube, envelope or cone.

### DETAILED DESCRIPTION OF THE INVENTION

Wheat flour tortillas have high toughness, extensibility and reliability due to the wheat gluten contained in the wheat flour. Corn masa tortillas, while gluten-free, have a much lower toughness, extensibility and rollability. It has been surprisingly found that tortillas formed from a particular blend of at least tapioca, quinoa and corn with amaranth, flours have a texture much more similar to wheat flour tortillas than other gluten-free tortillas, such as corn masa tortillas. Prior art gluten free tortillas tend to not have enough hydration, not be thoroughly mixed, and the starch and protein are more separated. Thus, the texture is not cohesive and the tortillas seem crumbly. In comparison, with the gluten-free tortillas of the present invention, the dough is thoroughly mixed, the starch holds the matrix together, and the available protein is well distributed.

The current invention relates to gluten-free tortilla formulations and soft shaped gluten-free tortillas. Broadly, in one aspect, the present invention comprises a soft, shaped gluten-free tortilla in a variety of specific three dimensional shapes or configurations. Traditionally, in northern Mexico, tortillas are cooked unleavened flexible flat breads typically in thin or flat, circular or elliptical shape useful as an edible bread wrap for small quantities of other foods such as meat pieces, rice and/or vegetables mixture. Throughout the specification and claims, percentages are by weight and temperatures in degrees Centigrade unless otherwise indicated.

As used herein, a "soft shaped tortilla" or, equivalently, a "shaped soft tortilla" means a fully cooked but non-fried tortilla farinaceous dough product that is formed into a thin walled three-dimensional shape of sufficient rigidity to hold its shape at room temperature. Thus, "tortilla" means a fully cooked product. By comparison, "tortilla dough" means uncooked or partly cooked product. "Fully cooked" is understood to be a product that reaches about 85° C. (+/-2 degrees), and is evidenced by substantially all of the starch being gelatinized.

The final moisture content of the soft shaped tortilla is less than about 32% (≤32%), preferably ≤28%. In preferred form, the gluten-free tortillas are shelf stable and exhibit a water activity value ("A_{w}") of ≤0.88. In less preferred variations, the soft shaped tortilla pieces are suitable only for refrigerated distribution and sale and exhibit an A_{w} of ≤0.92.

The particular ingredients and concentration provide finished gluten-free tortilla products having a water activity ("Aw") of 0.88 or less and for best results less than 0.85 to about 0.7. Selection of such water activity value is important in achieving a balance between microbial shelf stability and dough handling characteristics. Water activity can also be reduced by using polyols, such as glycerol and sorbitol.

The invention further encompasses a method of making a gluten-free tortilla product. In one particular aspect, the invention encompasses a soft shaped, gluten free tortilla that is hot formed to hold a 3D shape, such as the shape of a cup or bowl, e.g., a salad bowl. In other aspects, the tortilla can be formed to rigidly hold other 3D shapes, such as the shape of a taco (i.e., U-shaped taco shell) or the shape of a boat/canoe. In still other shaping aspects, the tortilla can be formed to hold the shape of a pita, flower bud, pie, tube, envelope, pod, bun, or cone. The formed shape can have a flat bottom and sealed sides.

In accordance with the invention, the gluten free tortilla articles can be provided in a variety of sizes from jumbo burrito size to mini chalupa size. A "chalupa" (Spanish for "boat" or "launch") is a tortilla dough formed into a shape reminiscent of a small boat. As starting material, it is possible to use round precooked tortillas or rounded flatted tortilla dough that is about 76 mm, about 102 mm, about 127 mm, about 152 mm, about 178 mm, about 191 mm, about 203 mm, about 229 mm, about 254 mm, or up to about 305 mm, or more, in diameter. For example, a 190 mm diameter precooked tortilla or flattened tortilla dough can be used to give cup dimensions of about 89 mm diameter and about 51 mm height. It is also possible to use precooked tortillas or flattened, pre-cut pieces of dough that are cut to easily fit into a mold for shaping. The starting material can be any shape suitable for the final mold, for example, round, oval, crescent, square, rectangular, trapezoid, triangular, etc.

Regardless of specific shape, a feature of the present soft shaped tortilla articles is a thin walled construction characteristic of a tortilla. Good results are obtained in terms of sufficient rigidity as to maintain the desired structure while nonetheless providing a soft eating quality characteristic of wheat tortillas, and when the present articles are fabricated with wall thicknesses ranges from about 1-5 mm, preferably about 24 mm. For example, in one specific embodiment, the thickness of the soft shaped tortilla can be about 1.3 mm, about 2.3 mm, about 3.3 mm, or about 3.8 mm.

In another variation, the shaped tortilla of the present invention can be made using a standard tortilla having a thickness less than 1.5 mm or a thickness greater than or equal to 1.5 mm. As mentioned above, range on thickness could be 0.5-5 mm. Consequently, in one aspect, the shaped tortilla can be made from a standard tortilla having a thickness of about 1.5 to about 3.0 mm, or greater. In one aspect, then, the shaped tortilla can be made with a standard tortilla thickness of about 1 to about 2.0 mm, or greater.

According to the present invention, the dough is formed from a composition including a gluten-free flour mixture present in an amount of 40-70% of weight of the composition. The gluten-free flour mixture consists only of tapioca flour (i.e., tapioca starch), quinoa flour, corn flour, and amaranth flour.

The composition also includes at least 30-50% water by weight of the composition, and an enzyme, such as in an amount of about 0.2-1 %, for structural integrity purposes.

According to the present invention, the flour mixture includes 40-50% tapioca flour, 3-10% quinoa flour, and 5-15% corn flour, and 3-10% amaranth flour by weight of the composition.

The composition also includes water in an amount of at least 30%, preferably 30% to 36% and most preferably about 33%, by weight of the composition and an enzyme, preferably in an amount of about 0.2-1% of the composition. The composition also preferably includes 1% to 3% of at least one hydrocolloid by weight of the composition, such as xanthan gum. The dough can additionally include about 0.5% to about 3% fine salt, 2-6% humectant and 0.5-1.5% emulsifier by weight of the composition. In any case, the present dough composition, in highly preferred embodiments, is free of edible fat or shortening ingredients, and also free of preservatives and a leavener.

Gluten-free tortillas according to embodiments of the present invention and those tortillas additionally described herein contain less than 20 ppm gluten, preferably less than 5 ppm gluten and, more particularly, 0% by weight of gluten. For purposes of the invention, gluten content may be determined by the gliadin content. Tapioca, quinoa, corn, and amaranth flours do not contain gluten, gliadin or glutenin. The gluten-free flour mixture is a substitute for wheat flour and/or other gluten containing flours traditionally used in tortillas. Although there certainly exists various known gluten-free flours which could conceivably by combined, the combination of several ingredients contained in the gluten-free dough described herein has been found to advantageously provide a gluten-free tortilla having taste, texture and rheology similar to that of gluten containing doughs, and provides gluten-free tortillas having flexibility and strength comparable to gluten containing tortillas.

In accordance with the invention, the tapioca starch may be native or unmodified starches. In other embodiments, the tapioca starch may be modified starches. Modified starches can be prepared by physically, enzymatically or chemically treating the native starch to change the properties of the starch. The inclusion of tapioca starch in the gluten-free tortilla dough has been found to be particularly advantageous in providing a dough texture similar to wheat based dough without creating off-flavors.

Humectant addition is helpful in achieving the present water activity levels and the microbial shelf stability at room temperature provided by the present food products. The humectant can be any commonly employed humectant ingredient(s). Preferred humectants for use herein can actually be selected from the group consisting of glycerin/glycerol, mannitol, propylene glycol, sorbitol, xylitol and mixtures thereof. Preferred for use herein is glycerin by itself, or a mixture of sorbitol and glycerin.

The dough also preferably includes, as referenced above, an enzyme which is employed to induce dough annealing. Annealing is a physical treatment that modifies the chemical and physical properties of starch without destroying granular structure. Thus, the original order and structure of the starch granules is advantageously maintained. Most preferably, the enzyme is α-amylase.

The formulations for the dough from which the present gluten-free tortillas are fabricated can additionally include one or more emulsifiers, which strengthen the dough, give improved mixing and handling tolerance, increase loaf volume, improve mechanical slicing characteristics, and can retard staling. Emulsifiers typically are surface active agents that stabilize mixtures of hydrophobic and hydrophilic substances by lowering the interfacial tension between usually immiscible substances. Emulsifying agents which can be used include mono- and diglycerides of fatty acids, propylene glycol mono-diesters of fatty acids, glycerol-lactose esters of fatty acids, ethoxylated or succinylated mono- and diglycerides, lecithin, diacetyl tartaric acid esters or mono-diglycerides, sucrose esters of glycerol, or equivalents thereof and mixtures thereof. Preferred emulsifiers include mixtures of diacetyl tartaric acid esters, and succinylated mono- and diglycerides. Emulsifying agents can be used singly or in combination. In a preferred embodiment, the emulsifier is monoglyceride.

The doughs of the present invention and those additionally described herein are prepared by blending the dry ingredients, including the gluten-free flour blend, salt and enzyme. The dry ingredients are mixed at a low speed for about two minutes. The liquid ingredients are then added. The liquid and dry ingredients are then mixed in a mixing device at a low speed followed by a high speed. In one preferred embodiment, the mixture is mixed at a low speed for 4 minutes, followed by mixing at a high speed for 10 minutes to fully develop the dough and establish the proper rheology.

The dough is provided in small measured quantities useful herein for making the present sized and shaped pieces. In the preparation of smaller base pieces, these quantities can range from about 5-25 g each. For larger soft shaped tortilla base pieces, a larger quantity (e.g., 40-60 g) can be used. Various techniques or apparatuses can be used to provide such measured quantities of dough. For example, the dough can be formed into a continuous shape such as a rope, sheet or ribbon and the continuous strand sectioned (such as by a reciprocating guillotine knife) into desired uniform (±10%) quantities, e.g., if a 10 g quantity is desired, then each quantity will be 10 g ±1 g. In small scale commercial production, simple manual cutting the dough into such small quantities can be performed.

The gluten-free tortilla can be formed by standard tortilla processing methods, such as sheeting, lamination, and ball & press methods. In preferred embodiments, the gluten-free tortillas are formed using a lamination process in which the dough is mixed, laminated and cut. The cut pieces are then passed through an oven and cooling station. In the sheeting method, the dough is mixed, sheeted and cut, followed by passing through an oven and cooling station. In the ball and press method, the dough is mixed, divided/rounded and allowed to rest prior to being pressed. The pieces are then passed through an oven and cooling station. By way of example, the oven and cooling station can comprise baking in a tortilla oven @ (approx. 554°F) about 290°C for 30-90 seconds and cooled for five minutes on a cooling rack. In embodiments where the dough is allowed to rest, good results are obtained when the measured quantities of dough, e.g., dough balls, are allowed to rest for 5-10 minutes at ambient temperatures. A resting step is useful for better facility of the dough conforming to the shape of the dough without thickness variations or weak spots in the finished pieces.

The disclosure also encompasses a method of making a soft gluten-free tortilla which is formed into a shape. The method can comprise putting raw tortilla dough in a mold and cooking it to completion to set the shape. Alternatively, the method can comprise heating raw tortilla dough in a mold to set the tortilla shape without fully cooking it. The shaped dough is then heated in a further step to fully cook it, so as to cause the structure to become firm, and to lower the moisture level.

As another alternative, the method can comprise preheating flattened tortilla dough, further heating the flattened dough in a mold to set the shape, and still further heating the molded dough to fully cook it and to reduce the moisture content. In a further alternative, the method can comprise heating a flat precooked and preheated tortilla; wrapping the heated, flat precooked and preheated tortilla around a mold to form a shape; and allowing the warm, shaped soft tortilla product to cool in a manner that retains the shape and reduces the moisture content.

Baking is preferred in heating the gluten-free tortillas to reduce the moisture content, including baking by conventional ovens, convection ovens, rotary rack ovens, brick ovens, infra-red ovens, tortilla ovens, and toaster ovens. Preferably, the gluten-free tortillas are heated to retain softness while avoiding a tough, chewy or soggy texture. In various aspects, the moisture content of the final product can be in a range from about 25% to about 32%, or specifically, about 28%, or about 30%. In particular aspects, the water activity of the final product can be in a range of about 0.82 to about 0.92, or less than or equal to 0.88. According to the present invention, a gluten-free tortilla composition (1) is described comprising: gluten-free flour mixture from 40-70% of weight of the composition, said gluten-free flour mixture being a combination of four different flours including tapioca flour, quinoa flour, corn flour, and amaranth flour; and water in an amount of at least 30% by weight of the composition, wherein the combination of flours includes 40-50% tapioca flour, 5-15% corn flour, and 3-10% of each of the quinoa and amaranth flours. Moreover, it is described (2) the composition of (1), wherein the composition is free of gluten protein, a fat, preservatives and a leavener. Furthermore, according to the present invention it is described (3) a gluten-free tortilla made from the gluten-free tortilla composition of (1). Moreover, it is described (4) the gluten-free tortilla of (3), wherein the tortilla has a 3D shape. It is also described (5) the gluten-free tortilla of (4), wherein the 3D shape takes the form of a cup or bowl. Even more, it is described (6) a method of preparing gluten-free tortillas, comprising the steps of: A. providing and mixing a dry composition including gluten-free flour mixture from 40-70% by weight of the composition, said gluten-free flour mixture being a combination of four different flours including tapioca flour, quinoa flour, corn flour, and amaranth flour, along with an enzyme to induce annealing; wherein the composition of flours includes 40-50% tapioca flour, 5-15% corn flour, and 3-10% of each of the quinoa and amaranth flours; B. adding liquid ingredients to the dry composition to form a dough mixture and mixing, said liquid ingredients including water in an amount of at least 30% by weight of the composition; C. forming the dough into quantities of individual tortilla pieces having a thickness of about 1-5 mm; and D. baking the tortilla pieces to form finished gluten-free tortillas. Moreover, it is described (7) the method of (6), wherein the composition is formed free of gluten protein, a fat, preservatives and a leavener. Furthermore, it is described (8) the method of (6), further comprising: forming the gluten-free tortillas into 3D shapes. It is also described (9) the method of (7), wherein the 3D shapes take the form of cups or bowls.

The examples described herein are for purposes of illustrating embodiments of the invention.

Certainly, it should be realized that both the type of flour and relative amounts employed can have a significant effect on the overall properties and characteristics of the resulting tortillas, with the particular flour combination having been found to be extremely advantageous in looking to mimic the properties of gluten containing tortillas, specifically wheat flour tortilla, as evidenced further below. At this point, it should be again noted that the composition lacks the inclusion of any fat such as shortening or oil, any preservative and even a leavener.

As referenced above, it is imperative that the gluten-free formulation of the invention has establish a gluten-free tortilla having taste, texture and rheology similar to that of gluten containing doughs, and provides gluten-free tortillas having flexibility and strength comparable to a gluten containing tortilla. To illustrate relevant characteristics, Table 1 below sets forth rheology parameters for a dough made in accordance with the tapioca, quinoa, corn and amaranth flour of the invention.

**Table 1**

| | | | Farinograph | | Texture Analyzer | |
|---|---|---|---|---|---|---|
| Batch # | Dough Temp. | Dough Moisture | BU | TTP | Compression Peak (Firmness) g | Adhesion Peak (Stickiness) g |
| 0307 | 22,5 ºC | 42.27% | 301 | 1 | 1348.53 | 17.39 |
| 1707 | 22,2ºC | 42.23% | 299 | 1 | 1326.49 | 18.22 |
| 1807 | 22,6ºC | 41.92% | 335 | 1 | 1683.03 | 15.22 |
| 1907 | 22,4 ºC | 42.02% | 271 | 1 | 1499.84 | 21.49 |
| 2007 | 22,4 ºC | 41. 79% | 305 | 1 | 1298.52 | 18.17 |
| 2207 | 22,5 ºC | 42.49% | 266 | 1 | 1281.28 | 20.69 |
| 2407 | 22,6 ºC | 41.62% | 273 | 1 | 1573.88 | 21.52 |
| 2607 | 22,5 ºC | 42.57% | 284 | 1 | 1355.97 | 20.94 |
| 2807 | 22,5 ºC | 41.87% | 296 | 1 | 1161.48 | 18.32 |
| 3007 | 22,5ºC | 41.79% | 310 | 1 | 1293.05 | 21.87 |
| 1608 | 22,1 ºC | 42.13% | 281 | 1 | 632.26 | 18.42 |
| 1708 | 22,2 ºC | 41.79% | 293 | 1 | 1324.96 | 20.04 |
| 2008 | 22,1 ºC | 42.15% | 269 | 1 | 1478.7 | 22.64 |

As to the finished product, the toughness, extensibility and reliability of the present gluten-free tortillas is advantageously more similar to that of wheat flour tortillas than the toughness and extensibility of corn masa tortillas (see Table 2 below). For purposes of this disclosure, toughness refers to resistance to extension. It is measured in grams and is related with the maximum strength registered. Toughness measurement gives information about the tortilla resistance, such as how the tortilla would resist loading or filling without breaking. Extensibility is a measure of the distance for the tortilla to break. In particular, the extensibility measurement gives information about the tortilla elasticity, i.e., deformation of the tortilla without breaking.

**Table 2**

| | | Gluten Free Tortillas | Corn Masa Tortillas | Wheat Flour Tortillas |
|---|---|---|---|---|
| | | Tapioca/Corn/Quinoa/Amaranth | Corn | Wheat |
| *Day 0* | | | | |
| Rollability | | 6 | 6 | 6 |
| Toughness | g | 710.52 | 275.21 | 720.35 |
| Extensibility | mm | 19.84 | 10.19 | 24.85 |

| *Day 30* | | | | |
|---|---|---|---|---|
| Rollability | | 6 | 6 | 6 |
| Toughness | g | 507.96 | 157.25 | 674.87 |
| Extensibility | mm | 16.19 | 8.6 | 21.69 |

## Claims

1. A gluten-free tortilla composition comprising:
gluten-free flour mixture from 40-70% of weight of the composition, said gluten-free flour mixture being a combination of four different flours including tapioca flour, quinoa flour, corn flour, and amaranth flour, and
water in an amount of at least 30% by weight of the composition,
wherein the combination of flours includes 40-50% tapioca flour, 5-15% corn flour, and 3-10% of
each of the quinoa and amaranth flours.

2. The composition of claim 1, wherein the composition is free of gluten protein, a fat, preservatives and a leavener.

3. A gluten-free tortilla comprising the gluten-free tortilla composition of claim 1.

4. A method of preparing gluten free tortillas, comprising the steps of:
A. providing and mixing a dry composition including gluten-free flour mixture from 40-70% by weight of the composition, said gluten-free flour mixture being a combination of four different flours including tapioca flour, quinoa flour, corn flour, and amaranth flour, along with an enzyme to induce annealing, wherein the combination of flours includes 40-50% tapioca flour, 5-15% corn flour, and 3-10% of each of the quinoa and amaranth flours,
B. adding liquid ingredients to the dry composition to form a dough mixture and mixing, said liquid ingredients including water in an amount of at least 30% by weight of the composition;
C. forming the dough into quantities of individual tortilla pieces having a thickness of about 1-5 mm; and
D. baking the tortilla pieces to form finished gluten-free tortillas.

5. The method of claim 4, wherein the composition is formed free of gluten protein, a fat, preservatives and a leavener.

## Patentansprüche

1. Eine glutenfreie Tortilla-Zusammensetzung, umfassend:
glutenfreie Mehlmischung mit 40-70 Gew.-% der Zusammensetzung, wobei die glutenfreie Mehlmischung eine Kombination aus vier verschiedenen Mehlen ist, enthaltend Tapiokamehl, Quinoamehl, Maismehl und Amaranthmehl, und
Wasser in einer Menge von mindestens 30 Gew.-% der Zusammensetzung,
wobei die Mehlkombination 40-50% Tapiokamehl, 5-15% Maismehl und jeweils 3-10% Quinoa- und
Amaranthmehl enthält.

2. Die Zusammensetzung nach Anspruch 1, wobei die Zusammensetzung frei von Glutenprotein, einem Fett, Konservierungsmitteln und einem Treibmittel ist.

3. Eine glutenfreie Tortilla, umfassend die glutenfreie Tortilla-Zusammensetzung nach Anspruch 1.

4. Ein Verfahren zur Herstellung glutenfreier Tortillas, umfassend die Schritte:
A. Bereitstellen und Mischen einer trockenen Zusammensetzung, enthaltend eine glutenfreie Mehlmischung mit 40-70 Gew.-% der Zusammensetzung, wobei die glutenfreie Mehlmischung eine Kombination aus vier verschiedenen Mehlen, enthaltend Tapiokamehl, Quinoamehl, Maismehl und Amaranthmehl, zusammen mit einem Enzym zum Induzieren des Annealings ist, wobei die Kombination von Mehlen 40-50% Tapiokamehl, 5-15% Maismehl und jeweils 3-10% Quinoa- und Amaranthmehl enthält,
B. Hinzufügen von flüssigen Zutaten zu der trockenen Zusammensetzung, um eine Teigmischung zu bilden, und Mischen, wobei die flüssigen Zutaten Wasser in einer Menge von mindestens 30 Gew.-% der Zusammensetzung enthalten;
C. Formen des Teigs in Mengen einzelner Tortillastücke mit einer Dicke von etwa 1-5 mm; und
D. Backen der Tortillastücke, um fertige glutenfreie Tortillas zu bilden.

5. Das Verfahren nach Anspruch 4, wobei die Zusammensetzung frei von Glutenprotein, einem Fett, Konservierungsmitteln und einem Treibmittel gebildet wird.

## Revendications

1. Composition de tortilla sans gluten comprenant :
un mélange de farines sans gluten à raison de 40 à 70 % en poids de la composition, ledit mélange de farines sans gluten étant une combinaison de quatre farines différentes comprenant de la farine de tapioca, de la farine de quinoa, de la farine de maïs, et de la farine d'amarante, et
de l'eau en une quantité d'au moins 30 % en poids de la composition,
dans laquelle la combinaison de farines contient 40 à 50 % de farine de tapioca, 5 à 15 %
de farine de maïs, et 3 à 10 % de chacune des farines de quinoa et d'amarante.

2. Composition selon la revendication 1, laquelle composition est exempte de protéine de gluten, de graisse, de conservateurs et d'agent levant.

3. Tortilla sans gluten comprenant la composition de tortilla sans gluten de la revendication 1.

4. Méthode de préparation de tortillas sans gluten, comprenant les étapes :
A. l'obtention et le mélange d'une composition sèche contenant un mélange de farines sans gluten à raison de 40 à 70 % en poids de la composition, ledit mélange de farines sans gluten étant une combinaison de quatre farines différentes comprenant de la farine de tapioca, de la farine de quinoa, de la farine de maïs, et de la farine d'amarante, conjointement avec une enzyme pour induire un recuit, laquelle combinaison de farines contient 40 à 50 % de farine de tapioca, 5 à 15 % de farine de maïs, et 3 à 10 % de chacune des farines de quinoa et d'amarante,
B. l'addition d'ingrédients liquides à la composition sèche pour former un mélange de pâte, et le mélange, lesdits ingrédients liquides contenant de l'eau en une quantité d'au moins 30 % en poids de la composition ;
C. la formation de la pâte en quantités de pièces de tortilla individuelles ayant une épaisseur d'environ 1 à 5 mm ; et
D. la cuisson des pièces de tortilla pour former des tortillas sans gluten finies.

5. Méthode selon la revendication 4, dans laquelle la composition est formée exempte de protéine de gluten, de graisse, de conservateurs et d'agent levant.
